Europäisches Patentamt

European Patent Office

Office européen des brevets

(11) Veröffentlichungsnummer: **0 231 504 B1**

## EUROPÄISCHE PATENTSCHRIFT

(45) Veröffentlichungstag der Patentschrift: **16.12.92**

(51) Int. Cl.⁵: **H02G 3/04**

(21) Anmeldenummer: **86117831.7**

(22) Anmeldetag: **20.12.86**

(54) **Einsatz für ein Kabelkanalrohr.**

(30) Priorität: **07.02.86 DE 3603849**

(43) Veröffentlichungstag der Anmeldung:
**12.08.87 Patentblatt 87/33**

(45) Bekanntmachung des Hinweises auf die
Patenterteilung:
**16.12.92 Patentblatt 92/51**

(84) Benannte Vertragsstaaten:
**AT BE CH DE ES FR GB GR IT LI LU NL SE**

(56) Entgegenhaltungen:
**AT-B- 373 737**
**DE-C- 118 902**
**GB-A- 2 135 136**

(73) Patentinhaber: **WAVIN B.V.**
**Händellaan 251**
**NL-8031 EM Zwolle(NL)**

(72) Erfinder: **Graafman, Jürgen**
**Buchsbaumweg 10**
**W-4450 Lingen 1(DE)**
Erfinder: **Möddel, Adolf**
**am Kreishof 1**
**W-4477 Twist 1(DE)**
Erfinder: **Guettouche, Ali**
**Johannesstrasse 7**
**W-4472 Haren 1(DE)**
Erfinder: **Suss, Jörg Ernst**
**Uhlandstrasse 7**
**W-6114 Gross-Umstadt(DE)**

(74) Vertreter: **Busse & Busse Patentanwälte**
**Postfach 1226 Grosshandelsring 6**
**W-4500 Osnabrück(DE)**

## Beschreibung

Die Erfindung betrifft einen Einsatz für ein Kabelkanalrohr.

Kabelkanalrohre werden im Fernmeldebereich in großem Umfang verwendet, um Kabel sauber, trocken und geschützt verlegen zu können und um ferner ein Auswechseln des Kabels ohne Bodenarbeiten zu ermöglichen, indem ein neues Kabel in einen verlegten Kabelkanal eingezogen wird. Diese Kabelkanäle haben standardisierte Innenweiten von z.B. 100 mm und sind nach Bedarf einzeln oder auch in Gruppen verlegt. Für dünnere Kabel ist dabei bereits vorgeschlagen worden, mehrere Kabel in einem standarisierten Kabelkanalrohr in der Weise zu verlegen, daß jedes Kabel nochmals in einem eigenen dünneren Schutzrohr aus Kunststoff eingelagert ist, um das Auswechseln einzelner Kabel zu erleichtern.

Aus GB-A-2 135 136 ist ein Einsatz für ein Kabelkanalrohr bekannt, das aus mehreren, im Kanalrohr verlegbaren Schutzrohren aus Kunststoff zur Aufnahme einzelner Kabel besteht, wobei die Schutzrohre durch einstückig an ihre äußere Mantelfläche angeformte flexible Zwischenstege auf ihrer gesamten Länge miteinander zu einer Schutzrohrflachbahn verbunden sind und die Schutzrohrflachbahn mittels der Zwischenstege zu einem Bündel aneinandergrenzender, zusammenhängender Schutzrohre verformbar ist. Hierbei ist die Bevorratung und Handhabung des Kabelkanalrohreinsatzes dadurch wesentlich vereinfacht, daß die für einen Verlegefall vorgesehenen Schutzrohre durch die Zwischenstege zu einer Einheit in Form einer Schutzrohrflachbahn zusammengefaßt sind. Dies ermöglicht es, daß sehr große Längen der Schutzrohrflachbahn für den Verlegevorgang im aufgewickelten Zustand bevorratet werden können, ohne daß die Wickeltrommel bei den großen aufgewickelten Rohrlängen in ihren Betriebsabmessungen übergroß und damit unhandlich wird. Andererseits ermöglichen es die flexiblen Zwischenstege, die Schutzrohrflachbahn raumausnutzend in vorhandenen Kabelkanalrohren, die üblicherweise einen kreisförmigen Querschnitt von etwa 100 mm aufweisen, zu verlegen, indem beim Einziehen der Schutzrohrflachbahn in das Kanalrohr diese zu einem Rohrbündel verformt wird. Dies erfolgt unter fortschreitender bereichsweiser Umlenkung der Flachbahn in der Weise, daß die Schutzrohre bündelförmig aufeinander zu liegen kommen und den Kanalrohrquerschnitt durch Annäherung des Rohrbündels an die Kreisform sinnvoll ausfüllen. Die einzelnen Schutzrohre des bekannten Einsatzes besitzen einen kreisförmigen Querschnitt, so daß im zu einem Rohrbündel verformten Zustand der Schutzrohrflachbahn die benachbarten Schutzrohre unter im wesentlichen linienförmiger Berührung ihrer aneinandergrenzenden Rohrmantelflächen aneinanderliegen, was unter dem Gesichtspunkt der Festigkeit und der Querschnittsausfüllung des Kabelkanalrohrs in vielen Anwendungsflällen ausreichend ist.

DE-C-118 902 beschreibt Schutzrohre mit einer dreieckigen Querschnittsgrundform, bei denen im Rohrbündel die aneinandergrenzenden Rohrwände von geraden Außenflächen begrenzt und die außenliegenden Rohrwände bogenförmig ausgebildet sind. Die einzelnen Schutzrohre bestehen in dem bekannten Fall aus Pappe oder dgl. und werden durch Verkittung der Stoßflächen oder mittels eines über das zusammengesetzte Gesamtrohr gezogenen Metallmantels miteinander vereinigt. Diese bekannten Schutzrohre können jedoch als in sich selbst fertige Rohre auch ganz selbständig Anwendung finden, wobei ihre flachen Seiten der Anpassung an die ebenen Gebäudemauern oder dgl. Flächen eines Gebäudes dienen, in dem entsprechend dem vorgesehenen Verwendungszweck der Schutzrohre elektrische Leitungen verlegt werden sollen. Die Schutzrohre bilden demgemäß ein Kammerrohr aus Pappe oder dgl. zum nachträglichen Einziehen elektrischer Drähte, das aus selbständigen sektorartig aneinandergestoßenen Einzelkammerrohren besteht, die dem Doppelzweck dienen, einerseits die Zusammenstellung von Gruppen verschiedener Kammergroßen, andererseits aber auch eine selbständige Verwendung als leistenartige Rohre mit flachen Wandanschmiegungsflächen zu ermöglichen.

AT-B-373 737 beschreibt Rohrelemente mit verschiedenen Querschnittsausführungen zur Herstellung von Rohrsystemen, insbesondere solchen zur Aufnahme von Installationsleitungen. Bei einer Ausführungsform mit sechseckförmigem Rohrquerschnitt ist bei ringförmig aneinandergereihten Einzelrohren ein mittlerer Axialkanal gebildet, dem jedoch keine Spitzen, insbesondere keine abgerundeten Spitzen, des Einzelrohrquerschnitts zugewandt sind. Vielmehr ist der Axialkanal bei dieser bekannten Ausgestaltung von den aneinandergrenzenden ebenen Sechseckteilflächen der einzelnen Sechseckrohre begrenzt. Bei einer weiteren, aus AT-B-373 737 bekannten Ausbildung eines Rohrbündels mit dreieckförmigen Einzelrohren sind weder ein mittlerer Axialkanal noch abgerundete Ekken des Dreieckquerschnitts der Einzelrohre vorgesehen.

EP-A-0 160 498 beschreibt einen Schutzrohreinsatz für Leitungen in Form eines extrudierten Hohlkörpers, der durch Trennstege in mehrere in Rohrlängsrichtung verlaufende Hohlräume unterteilt ist. Die Trennstege können bogenförmig ausgebildet sein und einzelne Schutzrohre mit einem kreisförmigen Kanal sowie Kanäle mit dreieckiger Querschnittsgrundform in den äußeren Zwischenbereichen zwischen zwei aneinandergrenzenden einzelnen Schutzrohren und außerdem einen mittleren Axialkanal zwischen den ringförmig aneinandergrenzenden einzelnen Schutzrohren bilden, der von Umfangsbereichen der einzelnen Schutzrohre definiert ist. Dabei ist es auch möglich, die Innenseite der Rohrwände der einzelnen Schutzrohre mit einem fertigungsseitig eingebrachten Gleitmittel zu versehen, um die Reibungskräfte beim Einziehen von Kabeln herabzusetzen.

Der Erfindung liegt die Aufgabe zugrunde, einen Einsatz für ein Kabelkanalrohr der angegebenen Art zu schaffen, bei dem unter Erhalt der durch die Zusammenfassung der Schutzrohre zu einer Flachbahn und deren Wickelfähigkeit erreichten einfachen Bevorratung und Handhabung des Einsatzes eine verbesserte Steifigkeit und Formhaltigkeit des durch Verformung der Schutzrohrflachbahn gebildeten Rohrbündels bei zugleich verbesserter Möglichkeit der Querschnittsausfüllung des vorhandenen Kabalkanalrohrs erreicht ist.

Ausgehend von einem Einsatz für ein Kabelkanalrohr, bestehend aus mehreren, im Kabelkanalrohr verlegbaren Schutzrohren aus Kunststoff zur Aufnahme einzelner Kabel, wobei die Schutzrohre durch einstückig an ihre äußere Mantelfläche angeformte flexible Zwischenstege auf ihrer gesamten Länge miteinander zu einer Schutzrohrflachbahn verbunden sind und die Schutzrohrflachbahn mittels der Zwischenstege zu einem Bündel aneinandergrenzender, zusammenhängender Schutzrohre verformbar ist, wird diese Aufgabe nach der Erfindung dadurch gelöst, daß die in der Flachbahn zusammengefaßten Schutzrohre jeweils eine dreieckige Querschnittsgrundform ihrer Rohrwände besitzen, wobei die im Rohrbündel aneinandergrenzenden Rohrwände von geraden Außenflächen begrenzt sowie in gegenseitiger Abstützungsanlage gehalten sind, während die außenliegenden Rohrwände bogenförmig ausgebildet sind und sich zu einer im wesentlichen geschlossenen Bündelkontur ergänzen, daß die Ecken der dreieckigen Querschnittsgrundform abgerundet sind und daß die Schutzrohre im Rohrbündel in der Bündelmitte mit den aneinandergrenzenden abgerundeten Spitzen ihres Wandprofils einen mittleren Axialkanal des Rohrbündels bilden.

Dadurch, daß bei dieser Ausgestaltung die in der Flachbahn zusammengefaßten Schutzrohre jeweils eine dreieckige Querschnittsform ihrer Rohrwände besitzen und die im Rohrbündel aneinandergrenzenden Rohrwände von geraden Außenflächen begrenzt sind, sind die benachbarten Schutzrohre im Rohrbündel jeweils unter Flächenberührung in der Weise in gegenseitiger Abstützungsanlage gehalten, daß ein hohes Maß an Steifigkeit und Stabilität der durch die Rohrbündelung gebildeten Rohrform gewährleistet ist. Gleichzeitig ist durch die mit Hilfe der bogenförmigen Außenwände der Schutzrohre gebildete geschlossene, rundlaufende Bündelkontur eine verbesserte Ausfüllung des Kanalrohrquerschnitts unter Anpassung an die üblicherweise zylindrische Kanalwand erreicht.

Um die Reibung beim Einziehen der einzelnen Kabel in die verlegten Schutzrohre zu verringern, kann eine Ausgestaltung der Schutzrohre gemäß den Ansprüchen 8 bis 11 vorgenommen sein. Die Schutzrohre sind dabei mit einer fabrikmäßig eingebrachten Dauerschmierung versehen, die sowohl den Ersteinzug eines Kabels als auch spätere Kabelauswechselarbeiten wesentlich erleichtert.

Weitere Ausbildungen der Erfindung ergeben sich aus den weiteren Ansprüchen und der nachstehenden Beschreibung in Verbindung mit der Zeichnung, in der mehrere Ausführungsbeispiele des Gegenstands der Erfindung veranschaulicht sind. In der Zeichnung zeigen:

Fig. 1

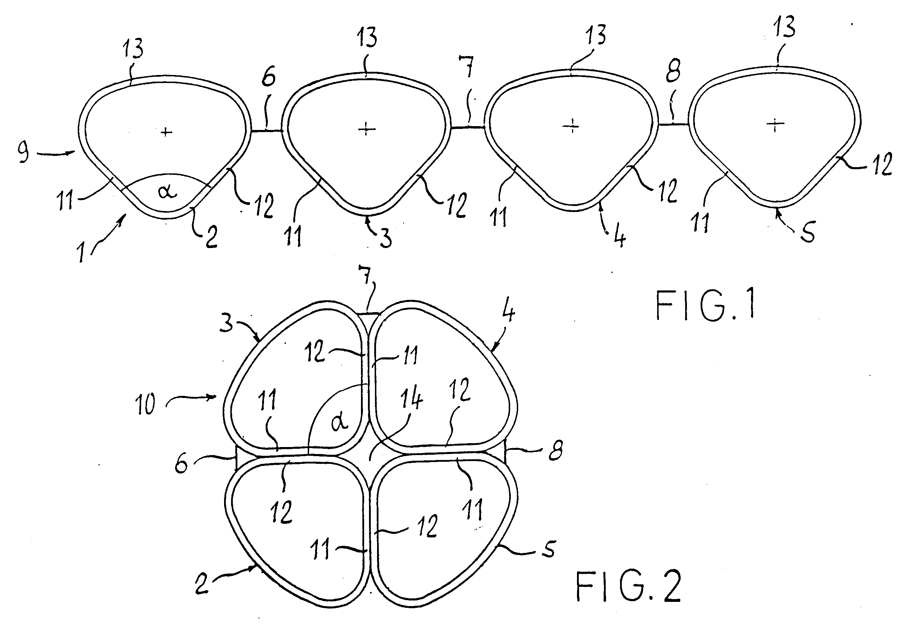

eine Stirnansicht eines Einsatzes für ein Kabelkanalrohr in Form einer Schutzrohrflachbahn nach einem ersten Ausführungsbeispiel,

Fig. 2

den Einsatz nach Fig. 1 in Form eines Rohrbündels und

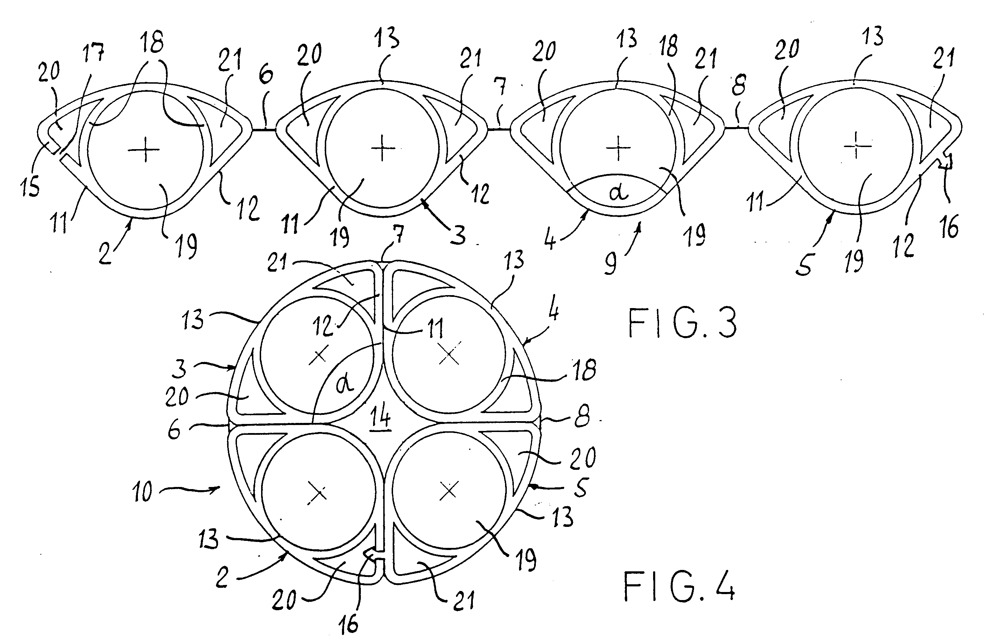

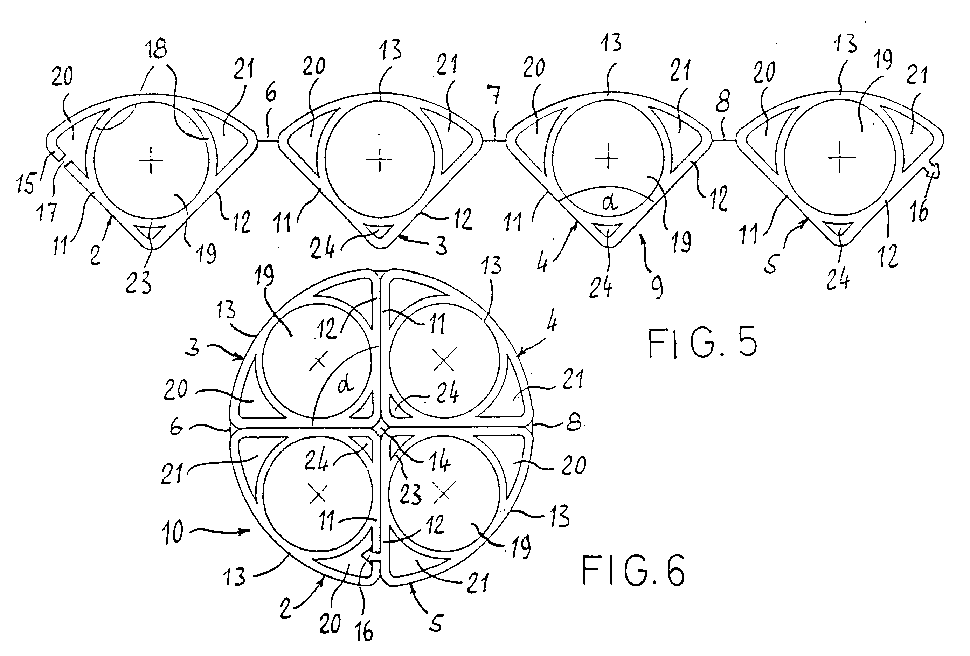

Fig. 3 u. 4 sowie Fig. 5 u. 6

je ein weiteres Ausführungsbeispiel des Kabelkanalrohreinsatzes in Darstellungen entsprechend den Fig. 1 und 2.

Der in der Zeichnung veranschaulichte, insgesamt mit 1 bezeichnete Einsatz umfaßt bei den dargestellten Beispielen jeweils vier Schutzrohre 2,3,4 und 5 aus einem geeigneten, insbesondere vernetzten Polyolefin, z.B. Polyäthylen, die durch einstückig an ihre äußere Mantelfläche angeformte flexible Verbindungsstege 6,7 und 8 auf ihrer gesamten Länge miteinander zu einer Schutzrohrflachbahn 9 verbunden sind, wie sie jeweils in den Fig. 1,3 und 5 dargestellt ist. Die Schutzrohre 2,3,4 und 5 und die flexiblen Zwischenstege 6,7 und 8 bilden dabei einen einstückig stranggepreßten Profilkörper. Die Zwischenstege 6,7 und 8 weisen die Form flacher Bänder auf, deren Dicke vorzugsweise geringer als die Wanddicke der Schutzrohre 2,3,4 und 5 ist. Dadurch sind sie in der Weise biegsam und flexibel, daß sie entlang längsverlaufenden bzw. sich parallel zu den Schutzrohrachsen erstreckenden Biegelinien verformbar sind, um eine gegenseitige Anlage der Schutzrohre 2,3,4 und 5 zur Bildung eines Rohrbündels 10 zu ermöglichen, wie es jeweils in den Fig. 2,4 und 6 dargestellt ist.

Die Schutzohre 2,3,4 und 5 besitzen eine dreieckige Querschnittsgrundform ihrer Rohrwände 11, 12 und 13, wobei die flexiblen Zwischenstege 6,7 und 8 im Bereich ihrer in der Schutzrohrflachbahn 9 eingenommen größten gegenseitigen Annäherung an die Schutzrohre 2,3,4 und 5 an die jeweilige Rohrwand 11 bzw. 12 angeformt sind. Dabei besitzen die Zwischenstege 6,7,8 sämtlich eine im wesentlichen ebene Querausrichtung in bezug auf die Längsachsen der Schutzrohre 2,3,4,5.

Die dreieckige Querschnittsgrundform der Schutzrohre 2,3,4,5 ist entsprechend dem dargestellten Beispiel von gleichschenkligen, rechtwinkligen Dreiecken mit abgerundeten Ecken gebildet, wobei der Scheitelwinkel α jeweils von einem rechten Winkel eingenommen ist.

Beim Einziehen der Schutzrohrflachbahn 9 in ein vorhandenes Kabelkanalrohr (nicht dargestellt) wird diese zu dem Rohrbündel 10 verformt, das eine im wesentlichen geschlossene, rundlaufende Bündelkontur besitzt. Diese Verformung erfolgt beispielsweise mit Hilfe eines dem Kabelkanalrohr vorgesetzten Formschuhs, der fortschreitend eine bereichsweise Umlenkung der Schutzrohrflachbahn 9 in der Weise herbeiführt, daß die Schutzrohre 2,3,4,5 in gegenseitige Anlage gebracht werden, wie es die Fig. 2,4 und 6 veranschaulichen. Dies erfolgt unter einer Verformung der Zwischenstege 6,7,8 entlang längsverlaufenden Biegelinien. Die den Seiten des Dreiecksquerschnitts entsprechenden, von geraden Außenflächen begrenzten Rohrwände 11 und 12 kommen dabei im Rohrbündel 10 in gegenseitige, vollflächige Abstützungsanlage, während die außenliegenden, den Grundseiten des Dreiecksquerschnitts entsprechenden Rohrwände 13 bogenförmig ausgebildet sind und sich somit im Rohrbündel 10 zu einer im wesentlichen geschlossenen, kreisförmigen Bündelkontur aneinanderfügen, wobei sich entsprechend die Scheitelwinkel α der vier Schutzrohre 2,3,4,5 zu 360° ergänzen. Dabei bilden die Schutzrohre 2,3,4,5 in der Bündelmitte mit den aneinandergrenzenden, den Winkel α einschließen den Spitzen ihres Wandprofils einen mittleren Axialkanal 14 des Rohrbündels 10, der zur Aufnahme von Sprechadern bis hin zu Kabeln geringen Durchmessers herangezogen werden kann.

Zur Fixierung der kreisförmigen Kontur des Rohrbündels 10 können beliebige geeignete Maßnahmen getroffen werden; beispielsweise kann bei der Bildung des Rohrbündels 10 eine Verklebung der bei der Bündelbildung fortschreitend in gegenseitige Berührungsanlage kommenden Rohrwände 11 und 12 der Schutzrohre 2 und 5 vorgenommen werden.

Bei dem Ausführungsbeispiel nach den Fig. 3 und 4 ist zur Sicherung der geschlossenen, kreisförmigen Bündelkontur an die Außenseiten der beiden entlang den Längsseitenrändern der Schutzrohrflachbahn 9 verlaufenden Außenrohre 2 und 5 je eine Druckverschlußleiste 15 bzw. 16 von etwa Rohrwandungsdicke einstückig angeformt, die sich durchgehend über die gesamte Länge der Schutzrohrflachbahn 9 erstrecken und bei der Bildung des Rohrbündels 10 fortschreitend in einen gegenseitigen Verriegelungseingriff bringbar sind. Die an das Außenrohr 5 angeformte Druckverschlußleiste 16 ist hierbei als widerhakenförmige Eingriffsleiste und die an das Außenrohr 2 als Teil der Rohrwand 11 angeformte Druckverschlußleiste 15 als Nutleiste mit einer Nut 17 ausgebildet, in die die Druckverschlußleiste 16 einrastet, wie es aus Fig. 4 ersichtlich ist.

Außerdem ist bei dem Ausführungsbeispiel nach den Fig. 3 und 4 das Querschnittsprofil der Schutzrohre 2,3,4,5 durch Trennstege 18 in mehrere in Rohrlängsrichtung verlaufende Hohlräume unterteilt. Die mit den Rohrwänden 11,12 und 13 einstückig stranggepreßten Trennstege 18 sind bogenförmig ausgebildet und bilden mit den Rohrwänden 11,12,13 des jeweiligen Schutzrohrs 2,3,4,5 einen mittleren kreisförmigen Kanal 19 sowie seitliche Kanäle 20 und 21 mit dreieckiger Querschnittsgrundform in den Eckbereichen der geraden Seitenwände 11,12 mit der bogenförmigen Außenwand 13 des Querschnittsprofils.

Die kreisförmigen Kanäle 19 erleichtern das Einbringen von Hilfsseilen mittels Preßluft bei den Montagearbeiten. Die Kanäle 20 und 21 in den Eckbereichen können beispielsweise zum Ausrichten der einzelnen Schutzrohre 2,3,4,5 bei der Herstellung druckluftdichter Verbindungen von Schutzrohrbündeln 10 miteinander bzw. beim Aufbringen von Abdichtelementen herangezogen werden. Der Kanal 20 des Schutzrohrs 2 dient bei der hier vorgesehenen lösbaren Verriegelung des Rohrbündels 10 mittels der Druckverschlußleisten 15 und 16 zur Aufnahme des widerhakenförmigen Eingriffsteils der Druckverschlußleiste 16, wie es aus Fig. 4 ersichtlich ist. Im übrigen ist auch bei diesem Ausführungsbeispiel der mittlere Axialkanal 14 des Rohrbündels 10 analog dem Ausführungsbeispiel nach den Fig. 1 und 2 gebildet, so daß sich hierzu eine erneute Beschreibung erübrigt. Auch hinsichtlich des Grundaufbaus, insbesondere hinsichtlich des Querschnittsprofils der Schutzrohre 2,3,4 und 5, stimmt das vorliegende Ausführungsbeispiel mit dem nach den Fig. 1 und 2 überein, wie es durch die Verwendung gleicher Bezugszeichen für übereinstimmende Teile in der Zeichnung zum Ausdruck gebracht ist.

Letzteres gilt auch für das Ausführungsbeispiel nach den Fig. 5 und 6, das im wesentlichen dem Ausführungsbeispiel nach den Fig. 3 und 4 entspricht. Anstelle der Abrundung mit großem Radius, die bei dem Ausführungsbeispiel nach den Fig. 3 und 4 im Bereich der den Winkel α einschließenden Dreiecksspitze vorgenommen ist, weist dieser Bereich bei dem Ausführungsbeispiel nach den Fig. 5 und 6 eine Abrundung mit vergleichsweise kleinem Radius auf, wobei mit Hilfe zusätzlicher, bogenförmiger, einstückig angeformter, kurzer Trennstege 23 jeweils ein zusätzlicher Kanal 24 mit im wesentlichen dreieckigem Querschnitt im Eckbereich zwischen den beiden Seitenwänden 11 und 12 des jeweiligen Schutzrohrs 2,3,4,5 gebildet ist. Diese Kanäle 24 bewirken einerseits eine Materialeinsparung und damit einhergehende Gewichtsverminderung und können andererseits ebenfalls als Führungskammern bei Montagearbeiten verwendet werden. Der mittlere Axialkanal 14 des Rohrbündels 10 ist hierbei stark verkleinert.

Die Sicherung der runden Form des Rohrbündels 10 erfolgt auch bei dem Ausführungsbeispiel nach den Fig. 5 und 6 mittels der Druckverschlußleisten 15 und 16. Zusätzlich kann in diesen Fällen auch eine Oberflächenprofilierung der in gegenseitige Abstützungsanlage im Rohrbündel 10 zu bringenden Rohrwände 11 und 12 vorgenommen sein, die bei Auslegen des Kanalrohreinsatzes in gekrümmten Trassen zur Erzielung bzw. Beibehaltung der Rohrform beiträgt, gleichzeitig aber eine Relativbewegung der einzelnen Schutzrohre 2,3,4,5 in axialer Richtung in begrenztem Umfang zuläßt. Eine solche Oberflächenausbildung kann beispielsweise durch längsverlaufende, in gegenseitigen Eingriff bringbare Wellungen oder Stege und Nuten gebildet sein.

Allen beschriebenen Ausführungsformen ist gemeinsam, daß die Außen- bzw. Berührungsflächen der Rohrwände 11 und 12 eine Ausbildung besitzen, die eine im wesentlichen vollflächige gegenseitige Abstützungsanlage dieser Rohrwände im Rohrbündel gewährleistet, gleichgültig, ob diese Flächen eben oder profiliert ausgebildet sind. Die Innenflächen der Rohrwände 11 und 12 sind hingegen bei den Ausführungsbeispielen nach den Fig. 3 und 4 sowie 5 und 6 durch die abgehenden Trennstege 18 bzw. 18 und 23 unterbrochen. Gleiches gilt für die bogenförmigen Außenwände 13, deren Innenflächen bei den Ausführungsbeispielen nach den Fig. 3 und 4 sowie 5 und 6 ebenfalls von den abgehenden Trennstegen 18 unterbrochen sind, während ihre Außenflächen eine durchgehend bogenförmige Ausbildung besitzen, um sich im aus der Flachbahn 9 gebildeten Rohrbündel 10 zu der rundlaufenden Bündelkontur zu ergänzen, die bei den dargestellten Beispielen mit vier Schutzrohren in Form gleichartiger und gleichgroßer rechtwinkliger Dreiecke als Querschnittsgrundgestalt kreisförmig ist.

Die Druckverschlußleisten 15 und 16 zum Sichern der runden Form des Rohrbündels 10 können im übrigen in der Weise abgewandelt werden, daß anstelle einer über die Rohrlänge durchgehenden, ununterbrochenen Ausführung Unterbrechungen der Druckverschlußleiste 16 vorgesehen werden, derart, daß eine Reihe gleichmäßig voneinander beabstandeter Druckknöpfe oder -rippen gebildet ist, die in entsprechende Löcher oder Schlitze der hierbei ihrerseits durch Zwischenstege entsprechend unterteilten Nut 17 zur Herbeiführung der Verriegelung der Druckverschlußleisten 15,16 eingreifen können.

Die Innenseite der Rohrwände 11,12,13 der Schutzrohre 2,3,4,5 kann zumindest bereichsweise mit einer ein fertigungsseitig eingebrachtes Gleitmittel haftend aufnehmenden Profilierung (nicht dargestellt) ausgestattet sein, um so eine Dauerschmierung der von den Rohrwänden umgrenzten Aufnahmekanäle für die einzuziehenden Kabel zu schaffen. Dadurch wird die Reibung beim Einziehen der Kabel wesentlich herabgesetzt.

Bei dem Ausführungsbeispiel gemäß den Fig. 1 und 2, bei dem die Innenkontur der jeweils einen Kabelaufnahmekanal definierenden Rohrwände 11,12,13 nicht-kreisförmig verläuft und aus flacheren und stärker gekrümmten Teilbereichen zusammengesetzt ist, kann die das Gleitmittel haftend aufnehmende innere Profilierung auf die flacheren Teilbereiche der Rohrwände 11,12,13 beschränkt sein, mit denen die Kabel beim Einziehen in die Schutzrohre 2,3,4,5 hauptsächlich in Berührung kommen.

Bei den Ausführungsformen nach den Fig. 3 und 4 sowie 5 und 6, bei denen kreisförmige Aufnahmekanäle 19 für die einzuziehenden Kabel gebildet sind, kann hingegen die das Gleitmittel aufnehmende Profilierung auf der gesamten Umfangsfläche der Kanäle 19, d.h. auf der Innenseite der die Kanäle gemeinsam begrenzenden Teilbereiche der Rohrwände 11,12,13 und der Zwischenstege 18, vorgesehen sein.

Die Profilierung ist vorzugsweise rippenförmig, insbesondere in Form von Längsrippen mit weniger als 1 mm Profiltiefe, ausgebildet.

Das Gleitmittel kann vorteilhaft aus einer Mischung von festen und flüssigen Bestandteilen, insbesondere Mikrokugeln und Öl oder einem Ölgemisch, bestehen und vorzugsweise auch haftende Bestandteile, z.B. Molybdändisulfid, aufweisen. Für den Ölbestandteil des Gleitmittels eignen sich insbesondere solche Öle, die weder wasseraufnehmend noch trocknend sind, z.B. Silikonöl.

**Patentansprüche**

1. Einsatz (1) für ein Kabelkanalrohr, bestehend aus mehreren, im Kanalrohr verlegbaren Schutzrohren (2,3,4,5) aus Kunststoff zur Aufnahme einzelner Kabel, wobei die Schutzrohre (2,3,4,5) durch einstückig an ihre äußere Mantelfläche angeformte flexible Zwischenstege (6,7,8) auf ihrer gesamten Länge miteinander zu einer Schutzrohrflachbahn (9) verbunden sind und die Schutzrohrflachbahn (9) mittels der Zwischenstege (6,7,8) zu einem Bündel (10) aneinandergrenzender, zusammenhängender Schutzrohre (2,3,4,5) verformbar ist, dadurch gekennzeichnet, daß die in der Flachbahn (9) zusammengefaßten Schutzrohre (2,3,4,5) jeweils eine dreieckige Querschnittsgrundform ihrer Rohrwände (11,12,13) besitzen, wobei die im Rohrbündel (10) aneinandergrenzenden Rohrwände (11,12) von geraden Außenflächen begrenzt sowie in gegenseitiger Abstützungsanlage gehalten sind, während die außenliegenden Rohrwände (13) bogenförmig ausgebildet sind und sich zu einer im wesentlichen geschlossenen Bündelkontur ergänzen, daß die Ecken der dreieckigen Querschnittsgrundform abgerundet sind und daß die Schutzrohre (2,3,4,5) im Rohrbündel (10) in der Bündelmitte mit den aneinandergrenzenden abgerundeten Spitzen ihres Wandprofils einen mittleren Axialkanal (14) des Rohrbündels (10) bilden.

2. Einsatz (1) nach Anspruch 1, dadurch gekennzeichnet, daß die dreieckige Querschnittsgrundform der Schutzrohre (2,3,4,5) von gleichschenkeligen Dreiecken gebildet ist, deren Scheitelwinkel ($\alpha$) gleich groß bemessen sind und sich im Rohrbündel (10) zu 360° ergänzen.

3. Einsatz (1) nach Anspruch 1 oder 2, dadurch gekennzeichnet, daß das Querschnittsprofil der Schutzrohre (2,3,4,5) durch bogenförmig ausgebildete Trennstege (18;18,23) in mehrere in Rohrlängsrichtung verlaufende Hohlräume unterteilt ist.

4. Einsatz (1) nach Anspruch 3, dadurch gekennzeichnet, daß die Trennstege (18;18,23) mit den Rohrwänden (11,12,13) des Schutzrohrs (2;3;4;5) einen mittleren kreisförmigen Kanal (19) sowie Kanäle (20,21;20,21,24) mit dreieckiger Querschnittsgrundform in den Eckbereichen des Querschnittsprofils des jeweiligen Schutzrohrs bilden.

5. Einsatz (1) nach einem der Ansprüche 1 bis 4, dadurch gekennzeichnet, daß an die Außenseiten der beiden entlang den Längsseitenrändern der Schutzrohrflachbahn (9) verlaufenden Außenrohre (2,5) je eine Druckverschlußleiste (15,16) einstückig angeformt ist, die bei der Bildung des Rohrbündels (10) fortschreitend in einen gegenseitigen Verriegelungseingriff bringbar sind.

6. Einsatz (1) nach einem der Ansprüche 1 bis 4, dadurch gekennzeichnet, daß die im Rohrbündel (10) aneinandergrenzenden Seitenwände (11,12) des Dreiecksquerschnitts der beiden entlang den Längsseitenrändern der Schutzrohrflachbahn (9) verlaufenden Außenrohre (2,5) bei der Bildung des Rohrbündels fortschreitend miteinander verklebbar sind.

7. Einsatz (1) nach einem der Ansprüche 1 bis 6, dadurch gekennzeichnet, daß die flexiblen Zwischenstege (6,7,8) im Bereich ihrer in der Schutzrohrflachbahn (9) eingenommenen größten gegenseitigen Annäherung an die Schutzrohre (2,3,4,5) an die jeweilige Rohrwand (11,12) angeformt sind.

8. Einsatz (1) nach einem der Ansprüche 1 bis 7, dadurch gekennzeichnet, daß die Innenseite der Rohrwände (11,12,13) zumindest bereichsweise mit einer ein fertigungsseitig eingebrachtes Gleitmittel haftend aufnehmenden Profilierung ausgestattet ist.

9. Einsatz (1) nach Anspruch 8, dadurch gekennzeichnet, daß das Gleitmittel aus einer Mischung von festen und flüssigen Bestandteilen, insbesondere Mikrokugeln und Öl oder einem Ölgemisch, besteht.

10. Einsatz (1) nach Anspruch 8 oder 9, dadurch gekennzeichnet, daß die Profilierung rippenförmig, insbesondere in Form von Längsrippen mit weniger als 1 mm Profiltiefe, ausgebildet ist.

11. Einsatz (1) nach einem der Ansprüche 8 bis 10, dadurch gekennzeichnet, daß bei einer nicht-kreisförmigen, aus flacheren und stärker gekrümmten Teilbereichen zusammengesetzten Innenkontur der Rohrwände (11,12,13) die Profilierung auf die flacheren Teilbereiche beschränkt ist.

**Claims**

1. Fitting (1) for a cable conduit tube, consisting of a plurality of plastic protective tubes (2, 3, 4, 5) which can be laid in the conduit tube and are intended for accommodating individual cables, in which arrangement the protective tubes (2, 3, 4, 5) are connected to one another over their entire length, by means of intermediate webs (6, 7, 8) integrally formed on their external surface, to form a flat protective-tube sheet (9), and the flat protective-tube sheet (9) can be shaped by means of the intermediate webs (6, 7, 8) to form a nest (10) of adjoining, cohesive, protective tubes (2, 3, 4, 5), characterised in that the protective tubes (2, 3, 4, 5) combined in the flat sheet (9) each have a basic triangular cross-sectional shape of their tube walls (11, 12, 13), where the tube walls (11, 12) adjoining in the tube nest (10) are defined by straight outer surfaces and are also held in mutual supporting contact, while the outer tube walls (13) are of curved design and complement one another to form an essentially closed nest contour, in that the corners of the basic triangular cross-sectional shape are rounded off, and in that the protective tubes (2, 3, 4, 5) in the tube nest (10), in the nest centre, form with the adjoining rounded-off tips of their wall profile a centre axial channel (14) of the tube nest (10).

2. Fitting (1) according to Claim 1, characterised in that the basic triangular cross-sectional shape of the protective tubes (2, 3, 4, 5) is formed by isoceles triangles, the vertex angles ($\alpha$) of which are the same size and complement one another in the tube nest (10) to make 360°.

3. Fitting (1) according to Claim 1 or 2, characterised in that the cross-sectional profile of the protective tubes (2, 3, 4, 5) is subdivided into a plurality of hollow spaces running in the tube longitudinal direction by separating webs (18; 18, 23) of curved design.

4. Fitting (1) according to Claim 3, characterised in that the separating webs (18; 18, 23) form with the tube walls (11, 12, 13) of the protective tube (2; 3; 4; 5) a central circular channel (19) as well as channels (20, 21,; 20, 21, 24) having a basic triangular cross-sectional shape in the corner areas of the cross-sectional profile of the respective protective tube.

5. Fitting (1) according to one of Claims 1 to 4, characterised in that one push fastener strip (15, 16) in each case is integrally formed on the outsides of the two outer tubes (2, 5) running along the longitudinal side margins of the flat protective-tube sheet (9), which push fastener strips (15, 16) can be progressively brought into mutual locking engagement when the tube nest (10) is being formed.

6. Fitting (1) according to one of Claims 1 to 4, characterised in that the side walls (11, 12), adjoining in the tube nest (10), of the triangular cross-section of the two outer tubes (2, 5) running along the longitudinal side margins of the flat protective-tube sheet (9) can be progressively adhesively bonded to one another when the tube nest (10) is being formed.

7. Fitting (1) according to one of Claims 1 to 6, characterised in that the flexible intermediate webs (6, 7, 8) are integrally formed on the respective tube wall (11, 12) in the area of their greatest mutual approach, assumed in the flat protective-tube sheet (9), to the protective tubes (2, 3, 4, 5).

8. Fitting (1) according to one of Claims 1 to 7, characterised in that the inside of the tube walls (11, 12, 13) is equipped at least in certain areas with profiling accommodating in an adhering manner a lubricant introduced during production.

9. Fitting (1) according to Claim 8, characterised in that the lubricant consists of a mixture of solid and liquid constituents, in particular micro balls and oil or an oil mixture.

10. Fitting (1) according to Claim 8 or 9, characterised in that the profiling is designed in a rib shape, in particular in the form of longitudinal ribs of less than 1 mm profile depth.

11. Fitting (1) according to one of Claims 8 to 10, characterised in that, in the case of a non-circular inner contour of the tube walls (11, 12, 13) which is composed of flatter and more tightly curved sections, the profiling is restricted to the flatter sections.

**Revendications**

1. Accessoire (1) pour un tube formant conduite de câbles, formé de plusieurs tubes protecteurs (2, 3, 4, 5) en matière plastique qui peuvent être posés dans le tube formant conduite et sont destinés à recevoir des câbles individuels, étant précisé que lesdits tubes protecteurs (2, 3, 4, 5) sont reliés entre eux sur toute leur longueur, par des barrettes intermédiaires flexibles (6, 7, 8) réalisées d'une seule pièce avec eux au niveau de leur surface latérale extérieure, pour former un collecteur de tubes protecteurs plat (9), et que ledit collecteur plat (9) est apte à être déformé à l'aide des barrettes intermédiaires (6, 7, 8) pour former un faisceau (10) de tubes protecteurs (2, 3, 4, 5) contigus et cohérents, caractérisé en ce que les tubes protecteurs (2, 3, 4, 5) réunis dans le collecteur plat (9) possèdent chacun des parois (11, 12, 13) à section transversale de forme fondamentale triangulaire, étant précisé que les parois de tubes (11, 12) contiguës dans le faisceau de tubes (10) sont définies par des surfaces extérieures droites et sont maintenues dans une position d'appui mutuel, tandis que les parois de tubes (13) situées à l'extérieur ont une forme bombée et se complètent pour former un contour de faisceau sensiblement fermé, en ce que les coins de la section transversale de forme fondamentale triangulaire sont arrondis et en ce que les tubes protecteurs (2, 3, 4, 5) prévus dans le faisceau de tubes (10) définissent, au milieu de celui-ci, avec les sommets arrondis contigus de leur profil de paroi, un canal axial central (14) du faisceau de tubes (10).

2. Accessoire (1) selon la revendication 1, caractérisé en ce que la forme fondamentale de section transversale triangulaire des tubes protecteurs (2, 3, 4, 5) est définie par des triangles isocèles dont les angles ($\alpha$) opposés par le sommet sont les mêmes et se complètent dans le faisceau de tubes (10) pour former 360°.

3. Accessoire (1) selon la revendication 1 ou 2, caractérisé en ce que le profil de section transversale des tubes protecteurs (2, 3, 4, 5) est divisé par des barrettes de séparation (18 ; 18, 23) de forme bombée en plusieurs cavités s'étendant dans le sens longitudinal des tubes.

4. Accessoire (1) selon la revendication 3, caractérisé en ce que les barrettes de séparation (18 ; 18, 23) définissent, avec les parois (11, 12, 13) du tube protecteur (2 ; 3 ; 4 ; 5), un canal circulaire central (19) ainsi que des canaux (20, 21 ; 20, 21, 24) à section transversale de forme fondamentale triangulaire, dans les zones de coin du profil de section transversale des tubes protecteurs respectifs.

5. Accessoire (1) selon l'une des revendications 1 à 4, caractérisé en ce qu'il est prévu des rebords de fermeture par pression (respectivement 15 et 16) qui sont réalisés d'une seule pièce au niveau des côtés extérieurs des deux tubes extérieurs (2, 5) s'étendant le long des bords latéraux longitudinaux du collecteur plat (9), et qui sont aptes à être amenés progressivement, lors de la formation du faisceau de tubes (10), en prise de verrouillage mutuelle.

6. Accessoire (1) selon l'une des revendications 1 à 4, caractérisé en ce que les parois latérales (11, 12), contiguës dans le faisceau de tubes (10), de la section transversale triangulaire des deux tubes extérieurs (2, 5) s'étendant le long des bords latéraux longitudinaux du collecteur de tubes protecteurs plat (9) sont aptes à être réunies progressivement par collage lors de la formation du faisceau de tubes.

7. Accessoire (1) selon l'une des revendications 1 à 6, caractérisé en ce que les barrettes intermédiaires flexibles (6, 7, 8) sont venues de matière avec les tubes protecteurs (2, 3, 4, 5), au niveau de leurs parois respectives (11, 12), dans la zone où elles sont les plus proches les unes des autres, dans le collecteur de tubes protecteurs plat (9).

8. Accessoire (1) selon l'une des revendications 1 à 7, caractérisé en ce que la face intérieure des parois de tubes (11, 12, 13) est pourvue, au moins par zones, d'un profil recevant de façon adhérente un agent anti-friction appliqué lors de la fabrication.

9. Accessoire (1) selon la revendication 8, caractérisé en ce que l'agent anti-friction se compose d'un mélange de composants solides et liquides, notamment de microbilles et d'huile, ou d'un mélange d'huile.

10. Accessoire (1) selon la revendication 8 ou 9, caractérisé en ce que le profil se présente sous la forme de nervures, notamment de nervures longitudinales d'une profondeur de profil inférieure à 1 mm.

11. Accessoire (1) selon l'une des revendications 8 à 10, caractérisé en ce que, dans le cas d'un contour intérieur des parois de tubes (11, 12, 13) non circulaire composé de zones partielles plus plates ou plus courbes, le profil est limité aux zones partielles plus plates.

FIG.1

FIG.2

EP 0 231 504 B1

FIG.3

FIG.4

EP 0 231 504 B1

FIG. 5

FIG. 6

EP 0 231 504 B1